# EUROPEAN PATENT APPLICATION

(11) **EP 4 382 481 A1**
(43) Date of publication of application: **12.06.2024**
(21) Application number: 22853078.8
(22) Date of filing: 02.08.2022
(51) Int. Cl.: C01B 32/28, B82Y 20/00, B82Y 30/00, B82Y 40/00, C01B 32/26, C09K 11/08, C09K 11/65

(54) **HETEROATOM-DOPED NANODIAMOND PARTICLES AND METHOD FOR PRODUCING HETEROATOM-DOPED NANODIAMOND PARTICLES**

(30) Priority: 04.08.2021 JP 2021127914; 18.03.2022 JP 2022043337
(71) Applicant: Daicel Corporation, Osaka 530-0011 (JP)
(72) Inventor: TSURUI, Akihiko, Tokyo 108-8230 (JP); MAHIKO, Tomoaki, Tokyo 108-8230 (JP); NISHIKAWA, Masahiro, Tokyo 108-8230 (JP); LIU, Ming, Tokyo 108-8230 (JP); MAKINO, Yuto, Tokyo 108-8230 (JP); YOSHIKAWA, Taro, Tokyo 108-8230 (JP)
(74) Representative: Grünecker Patent- und Rechtsanwälte PartG mbB
(86) International application number: PCT/JP2022/029721
(87) International publication number: WO 2023/013659

(57) **Abstract**

The present invention provides heteroatom-doped nanodiamond particles having a fluorescence emission peak derived from heteroatom-vacancy (Heteroatom-V) centers and satisfying conditions consisting of: (i) when 1 µL of a 1 mass% aqueous suspension of the heteroatom-doped nanodiamond particles is added dropwise onto a glass substrate, and fluorescence spectra are acquired for 101 × 101 spots using a microscopic Raman apparatus at a spatial resolution of 1 µm and in a sample range of 100 µm × 100 µm, the percentage of the number of bright spots emitting fluorescence with a ZPL peak at ZPL ± X nm (0 ≤ X ≤ 5) of the Heteroatom-V centers is 50% or greater; and (ii) an average size of primary particles is from 2 to 70 nm.

## Description

### Technical Field

The present invention relates to heteroatom-doped nanodiamond particles and a production method for producing the heteroatom-doped nanodiamond.

### Background Art

A luminescent center in a diamond is a nanosized chemically stable fluorescent chromophore and does not exhibit degradation, fading, or flickering in vivo, which often occur in organic fluorescent, and thus is expected to work as a probe for fluorescence imaging. In addition, information on spins of electrons excited in the luminescent center can be sometimes measured from outside, and thus the luminescent center is also expected to be utilized in optically detected magnetic resonance (ODMR) or as a quantum bit.

Patent Document 1 discloses a nanodiamond doped with a heteroatom such as Si.

### Citation List

### Patent Literature

Patent Document 1: WO2020/195997

### Summary of Invention

### Technical Problem

An object of the present invention is to provide a method for producing a high-quality heteroatom-doped nanodiamond having higher fluorescence intensity and higher concentration of a fluorescent substance, and to provide a heteroatom-doped nanodiamond.

### Solution to Problem

The present invention provides the following heteroatom-doped nanodiamond particles and the following production method for producing the heteroatom-doped nanodiamond particles.
[1] Heteroatom-doped nanodiamond particles having a fluorescence emission peak derived from heteroatom-vacancy (Heteroatom-V) centers and satisfying conditions consisting of:
   (i) when 1 µL of a 1 mass% aqueous suspension of the heteroatom-doped nanodiamond particles is added dropwise onto a glass substrate, and fluorescence spectra are acquired for 101 × 101 spots using a microscopic Raman apparatus at a spatial resolution of 1 µm and in a sample range of 100 µm × 100 µm, a percentage of the number of bright spots emitting fluorescence with a zero-phonon line (ZPL) peak at ZPL ± X nm (0 ≤ X ≤ 5) of the Heteroatom-V centers is 50% or greater; and
   (ii) an average size of primary particles is from 2 to 70 nm.
[2] The heteroatom-doped nanodiamond particles according to [1], wherein a heteroatom is a Group 14 element selected from the group consisting of Si, Ge, Sn, and Pb.
[3] The heteroatom-doped nanodiamond particles according to [1] or [2], wherein a heteroatom is Si, and (i) when 1 µL of a 1 mass% aqueous suspension of the heteroatom-doped nanodiamond particles is added dropwise onto a glass substrate, and fluorescence spectra are acquired for 101 × 101 spots using a microscopic Raman apparatus at a spatial resolution of 1 µm and in a sample range of 100 µm × 100 µm with an excitation light of 532 nm, a percentage of the number of bright spots emitting fluorescence with a ZPL peak at ZPL 738 nm ± X nm (0 ≤ X ≤ 5) of Si-V centers is 50% or greater.
[4] The heteroatom-doped nanodiamond particles according to [1] or [2], wherein a heteroatom is Ge, and (i) when 1 µL of a 1 mass% aqueous suspension of the heteroatom-doped nanodiamond particles is added dropwise onto a glass substrate, and fluorescence spectra are acquired for 101 × 101 spots using a microscopic Raman apparatus at a spatial resolution of 1 µm and in a sample range of 100 µm × 100 µm with an excitation light of 532 nm, a percentage of the number of bright spots emitting fluorescence with a ZPL peak at ZPL 602 nm ± X nm (0 ≤ X ≤ 5) of Ge-V centers is 50% or greater.
[5] The heteroatom-doped nanodiamond particles according to any one of [1] to [4], wherein a peak area ratio of sp²-carbon to sp³-carbon (sp²-carbon/sp³-carbon) of the heteroatom-doped nanodiamond particles obtained by Raman spectroscopy is from 0.01 to 7.0.
[6] The heteroatom-doped nanodiamond particles according to any one of [1] to [5], wherein the heteroatom-doped nanodiamond particles satisfy one or more conditions selected from the group consisting of:
   (a) the heteroatom-doped nanodiamond particles have a zeta potential from - 70 mV to 70 mV; and
   (b) when the heteroatom-doped nanodiamond particles are dispersed in water at a concentration of 3 wt.%, a pH is from 1 to 12.
[7] The heteroatom-doped nanodiamond particles according to any one of [1] to [6], wherein the heteroatom-doped nanodiamond particles have a shape that is spherical, ellipsoidal, or polyhedral.
[8] The heteroatom-doped nanodiamond particles according to any one of [1] to [7], wherein the heteroatom-doped nanodiamond particles have a BET specific surface area from 20 to 900 m²/g.
[9] The heteroatom-doped nanodiamond particles according to any one of [1] to [8], wherein the percentage of the number of bright spots is 90% or greater.
[10] A production method for producing heteroatom-doped nanodiamond particles, the method including subjecting a heteroatom-doped nanodiamond raw material produced by detonation method to one or more treatments selected from the group consisting of:
   (I) an oxidation treatment at a temperature from 500 to 650°C; and
   (II) a hydrogenation treatment at a temperature from 300 to 1200°C.
[11] The production method according to [10], wherein the oxidation treatment is performed in an atmosphere having an oxygen concentration from 1 to 100%.
[12] The production method according to [10], wherein the hydrogenation treatment is performed in an atmosphere having a hydrogen concentration from 1 to 100%.

### Advantageous Effects of Invention

The method of the present invention allows for remarkably high fluorescence concentration of nanodiamond particles, or a bulk or a particle population of the particles, doped with a heteroatom such as Si. As such, the particles are more useful when used as probes for fluorescence imaging, in optically detected magnetic resonance (ODMR), or as quantum bits.

### Brief Description of Drawings

FIG. 1(a) is a fluorescence microscope image of Si-doped nanodiamond particles subjected to an oxidation treatment at 570°C, and FIG. 1(b) is a fluorescence microscope image of Si-doped nanodiamond particles subjected to an oxidation treatment at 570°C and then subjected to a hydrogenation treatment at 550°C.
FIG. 2 presents the relationships between the peak area ratio of sp²-carbon to sp³-carbon (sp²-carbon/sp³-carbon) and the number of bright spots of the Si-doped nanodiamond particles obtained in Comparative Examples 1 to 4 and Examples 1 and 2.
FIG. 3 is a fluorescence image of a GeV fluorescent ND subjected to a gas-phase oxidation treatment at 470°C for 2 hours in Comparative Example 5.
FIG. 4 is a fluorescence image of a GeV fluorescent ND subjected to a gas-phase oxidation treatment at 520°C for 2 hours in Example 3.

### Description of Embodiments

The heteroatom-doped nanodiamond particles according to an embodiment of the present invention satisfies conditions consisting of:
(i) when 1 µL of a 1 mass% aqueous suspension of the heteroatom-doped nanodiamond particles is added dropwise onto a glass substrate, and fluorescence spectra are acquired for 101 × 101 spots using a microscopic Raman apparatus at a spatial resolution of 1 µm and in a sample range of 100 µm × 100 µm, a percentage of the number of bright spots emitting fluorescence with a zero-phonon line (ZPL) peak at ZPL ± X nm (0 ≤ X ≤ 5) of Heteroatom-V centers is 50% or greater; and
(ii) an average size of primary particles is preferably from 2 to 70 nm, more preferably from 2.5 to 60 nm, even more preferably from 3 to 55 nm, and particularly preferably from 3.5 to 50 nm.

Examples of the microscopic Raman apparatus for measuring the number of bright spots include LabRAM HR Evolution, a microscopic laser Raman spectrometer available from Horiba, Ltd. When high-speed mapping and bright spot imaging at ZPL ± X nm (0 ≤ X ≤ 5) are performed on 101 × 101 spots using a microscopic Raman apparatus at a spatial resolution of 1 µm and in a sample range of 100 µm × 100 µm with an excitation light of 488 nm, 532 nm, or 633 nm to obtain fluorescence spectra, a percentage of the number of bright spots emitting fluorescence at ZPL ± X nm (0 ≤ X ≤ 5) of Heteroatom-V centers is preferably 50% or greater, more preferably 80% or greater, even more preferably 90% or greater, and most preferably 100%. In ZPL ± X nm (0 ≤ X ≤ 5), X is any number from 0 nm to 5 nm. The bright spot imaging may be performed at ZPL (± 0 nm), or may be performed in a range such as ZPL ± 0.5 nm, ZPL ± 1 nm, ZPL ± 2 nm, ZPL ± 3 nm, ZPL ± 4 nm, or ZPL ± 5 nm, with the maximum wavelength range being ZPL ± 5 nm.

Since the wavelength of ZPL (the wavelength of the peak top) may vary depending on the structure of the fluorescence center, the number of bright spots emitting fluorescence of the ZPL peak is measured in the range of "ZPL ± X nm (0 ≤ X ≤ 5)", and the percentage of the bright spots is calculated. For example, in the case of SiV, the ZPL may be 738 nm (± 0 nm), or the ZPL may deviate slightly from 738 nm. However, even if the ZPL deviates slightly, it is not likely that the ZPL deviates from the known ZPL (738 nm) by more than 5 nm, and as such the ZPL falls within the range of ZPL ± X nm (0 ≤ X ≤ 5).

Since the waveform of the ZPL peak is stored in the microscopic Raman apparatus, the presence of a ZPL peak is determined within the range of ZPL ± X nm (0 ≤ X ≤ 5) for each spot of the 101 × 101 spots. The presence of a ZPL peak is counted as the presence of a bright spot. For example, when the deviation of the ZPL is 0 nm, the number of bright spots emitting fluorescence of the ZPL peak does not change when measurement is performed at any of the ZPL, ZPL ± 0.5 nm, ZPL ± 1 nm, ZPL ± 2 nm, ZPL ± 3 nm, ZPL ± 4 nm, and ZPL ± 5 nm. ZPL ± X nm (0 ≤ X ≤ 5) is a wavelength range set for reliably capturing a bright spot emitting fluorescence of the ZPL peak. The maximum number of bright spots is 101 × 101 = 10201. When the number of bright spots is 10201, the percentage of the number of bright spots emitting fluorescence at ZPL ± X nm (0 ≤ X ≤ 5) of the Heteroatom-V centers is 100%. When the percentage of the number of bright spots is 50% or greater, the number of bright spots is 5101 or greater. The number of bright spots may be measured at any of the central portion, the intermediate layer, and the outer circumferential portion of the glass substrate, but is preferably measured at least within the portion where a sample is applied. The percentage of the number of bright spots is preferably 50% or greater, more preferably 80% or greater, even more preferably 90% or greater, and most preferably 100% in at least one of the group consisting of the central portion, the intermediate layer, and the outer circumferential portion. More preferably, the percentage of the number of bright spots is preferably 50% or greater, more preferably 80% or greater, even more preferably 90% or greater, and most preferably 100% in at least two of the group consisting of the central portion, the intermediate layer, and the outer circumferential portion. Most preferably, the percentage of the number of bright spots is preferably 50% or greater, more preferably 80% or greater, even more preferably 90% or greater, and most preferably 100% in the central portion, the intermediate layer, as well as the outer circumferential portion. Note that, the central portion means a portion where the suspension drop-coated eventually dries, and the outer circumferential portion means a coated portion that has a thickness and that is formed in a coffee-ring shape at the outer circumference of the portion coated with the suspension. The intermediate layer means the area between the outer circumferential portion and the central portion. The average size of the primary particles can be determined by Scherrer equation based on the analysis result of the powder X-ray diffractometry (XRD). Examples of a measurement instrument of XRD include the Multipurpose X-ray Diffraction System with Built-in Intelligent Guidance (available from Rigaku Corporation).

The peak area ratio of sp²-carbon to sp³-carbon (sp²-carbon/sp³-carbon) of the heteroatom-doped nanodiamond particles according to an embodiment of the present invention obtained by Raman spectroscopy is preferably from 0.01 to 7 or from 0.05 to 3, preferably from 0.1 to 1.2 or from 0.1 to 1, more preferably from 0.1 to 0.5, and even more preferably from 0.1 to 0.3. The oxidation treatment of the present invention can reduce the proportion of sp²-carbon and increase the fluorescence intensity.

The peak area ratio of sp²-carbon to sp³-carbon (sp²-carbon/sp³-carbon) can be measured by, for example, microscopic Raman spectroscopy using a 325-nm laser and a microscopic Raman spectrometer. The peak area of sp²-carbon refers to the total area of two peaks that appear near 1250 cm⁻¹ and 1328 cm⁻¹, and the peak area of sp³-carbon refers to the total area of two peaks that appear near 1500 cm⁻¹ and 1590 cm⁻¹. An example of the microscopic Raman spectrometer that can be used includes LabRAM HR Evolution, a microscopic laser Raman spectrometer (available from Horiba, Ltd.).

In an embodiment according to the present invention, the heteroatom-doped nanodiamond particles has a positive or negative zeta potential. The zeta potential of the heteroatom-doped nanodiamond particles is preferably -70 mV or greater or 70 mV or less, and more preferably -60 mV or greater or 30 mV or less. In a preferred embodiment according to the present invention, the zeta potential of the heteroatom-doped nanodiamond is preferably from -70 to 70 mV, and more preferably from -60 to 30 mV.

When the heteroatom-doped nanodiamond particles according to an embodiment of the present invention are dispersed in water at a concentration of 3 wt.%, the pH is preferably from 1 to 12.

The shape of the heteroatom-doped nanodiamond particles is not limited, but is preferably spherical, ellipsoidal, or polyhedral.

The BET specific surface area of the heteroatom-doped nanodiamond particles according to an embodiment of the present invention is preferably from 20 to 900 m²/g, from 25 to 800 m²/g, from 30 to 700 m²/g, from 35 to 600 m²/g, from 50 to 500 m²/g, from 100 to 400 m²/g, and more preferably from 200 to 300 m²/g. The BET specific surface area can be measured by nitrogen adsorption. Examples of a measurement instrument for the BET specific surface area include BELSORP-mini II (available from Microtrac BEL). The BET specific surface area can be measured under the following conditions, for example.
- Measured powder amount: 40 mg
- Preliminary drying: treated at 120°C for 3 hours in a vacuum.
- Measurement temperature: -196°C (liquid nitrogen temperature)

The heteroatom content of the heteroatom-doped nanodiamond according to an embodiment of the present invention is preferably from 0.0001 to 10.0 mass%, more preferably from 0.0001 to 5.0 mass%, and even more preferably from 0.0001 to 1.0 mass%. The heteroatom content can be measured by, for example, inductively-coupled plasma emission spectrometry (ICP-AES), XRF, and secondary ion mass spectrometry (SIMS). When the heteroatom is a Group 14 element such as Si, Ge, Sn, or Pb, the heteroatom content in the heteroatom-doped nanodiamond can be quantified as an acidic solution after alkali fusion.

The concentration of the Heteroatom-V centers in the heteroatom-doped nanodiamond particles according to an embodiment of the present invention is preferably 1 × 10¹⁰/cm³ or greater, and more preferably from 2 × 10¹⁰ to 1 × 10¹⁹/cm³. It is presumed that the concentration of the Heteroatom-V centers can be determined using, for example, a confocal laser microscope or a fluorescence and absorbance spectrometer. Note that, a literature (DOI 10.1002/pssa.201532174) can be used as a reference for determination of the concentration of Heteroatom-V centers by fluorescence and absorbance spectrometry.

In the present specification, the heteroatom is selected from the group consisting of B, P, Si, S, Cr, Sn, Al, Ge, Li, Na, K, Cs, Mg, Ca, Sr, Ba, Ti, Zr, V, Nb, Ta, Mo, W, Mn, Fe, Ni, Cu, Ag, Zn, Cd, Hg, Ga, In, Tl, Pb, As, Sb, Bi, Se, Te, Co, Xe, F, Y, and lanthanoids, preferably selected from the group consisting of Si, Ge, Sn, B, P, Ni, Ti, Co, Xe, Cr, W, Ta, Zr, Zn, Ag, Pb, and lanthanoids, and more preferably selected from the group consisting of Si, Ge, Sn, B, P, Ni, Ti, Co, Xe, Cr, W, Ta, Zr, Zn, Ag, and Pb.

The preferred heteroatom to be used for doping of nanodiamonds is a Group 14 element selected from the group consisting of Si, Ge, Sn, and Pb, boron (B), phosphorus (P), and Ni, and a more preferred heteroatom is Si, B, and P.

In a preferred embodiment, the nanodiamond particles produced by the production method according to the present invention contains a Group 14 element selected from the group consisting of Si, Ge, Sn, and Pb, at least one selected from the group consisting of B, P, and Ni, and at least one type of another heteroatom.

In another preferred embodiment, the nanodiamond particles produced by the production method according to the present invention contains at least one selected from the group consisting of Si, B, P, and Ni, and at least one type of another heteroatom. The number of types of heteroatoms used for doping the nanodiamond particles produced using the production method according to an embodiment of the present invention is preferably from 1 to 5 types, more preferably from 1 to 4 types, and even more preferably 1 type, 2 types, or 3 types.

A heteroatom-doped nanodiamond raw material to be used in the production method according to an embodiment of the present invention can be produced by, for example, a detonation method that includes mixing of an explosive composition containing at least one type of explosive and at least one type of heteroatom compound and exploding of the resulting mixture in a sealed container. Examples of the container include metal containers and synthetic resin containers. The explosive and the heteroatom compound are preferably formed by pressing or casting. Examples of the method of producing particles (dry powder) of the explosive and the heteroatom compound include crystallization, crushing, and spray flash evaporation.

The fluorescence intensity of the heteroatom-doped nanodiamond raw material can be increased by performing an oxidation treatment and/or a hydrogenation treatment. Preferably, the oxidation treatment and the hydrogenation treatment are performed. More preferably, the oxidation treatment is performed first, and then the hydrogenation treatment is performed.

In the oxidation treatment, the temperature is important. At 470°C or below, the proportion of sp²-carbon cannot be reduced to increase the fluorescence intensity. The lower limit of the temperature of the oxidation treatment is preferably 500°C, 510°C, 520°C, 530°C, 540°C, or 550°C, and the upper limit thereof is 650°C, 640°C, 630°C, 620°C, 610°C, 600°C, or 590°C. The temperature of the oxidation treatment is most preferably from 550 to 590°C. The oxygen concentration in the atmosphere in the oxidation treatment is preferably from 1 to 100 v/v%, from 1 to 50 v/v%, or from 1 to 25 v/v%, and more preferably from 1 to 10 v/v%. The time of the oxidation treatment is preferably from 0.5 to 20 hours, from 0.5 to 10 hours, or from 1 to 5 hours, and more preferably from 1 to 3 hours.

The temperature of the hydrogenation treatment is also important. The lower limit of the temperature of the hydrogenation treatment is preferably 300°C, 350°C, 400°C, 410°C, 420°C, or 430°C, and the upper limit of the temperature of the hydrogenation treatment is preferably 1200°C, 1210°C, 1220°C, or 1230°C. The hydrogen concentration in the atmosphere in the hydrogenation treatment is preferably from 1 to 100 v/v%, from 1 to 50 v/v%, or from 1 to 25 v/v%, and more preferably from 1 to 10 v/v%. The time of the hydrogenation treatment is preferably from 1 to 10 hours, or from 2 to 9 hours, or from 3 to 8 hours, and more preferably from 4 to 7 hours.

Preferred heteroatom-doped nanodiamond particles produced by the production method according to an embodiment of the present invention have a fluorescence emission peak due to the Heteroatom-V centers. The wavelength of the fluorescence emission peak is, for example, preferably from 720 to 770 nm, and more preferably from 730 to 760 nm, in the case where the heteroatom contains silicon; preferably from 580 to 630 nm, and more preferably from 590 to 620 nm, in the case where the heteroatom contains germanium; preferably from 590 to 650 nm, and more preferably from 600 to 640 nm, in the case where the heteroatom contains tin; and preferably from 540 to 600 nm, and more preferably from 550 to 590 nm, in the case where the heteroatom contains lead.

In a preferred embodiment of the present invention, the heteroatom-doped nanodiamond particles that are produced by the production method according to an embodiment of the present invention and that emit fluorescence of heteroatom-vacancy centers, the heteroatom being other than phosphorus and boron, may be further doped with phosphorus and/or boron. It is conceivable that introduction of these atoms (B and/or P) has effects that electric charge of the Heteroatom-V center, in which the heteroatom is one other than B and/or P, or defect (luminescent center) originated from another heteroatom for doping is adjusted, and the fluorescence is stabilized. Furthermore, the heteroatom-doped nanodiamond produced by the production method according to an embodiment of the present invention and the heteroatom-doped nanodiamond particles according to an embodiment of the present invention may contain a fluorescent emission by N-V centers. The N-V center is a luminescent center by nitrogen and vacancy and has a wide fluorescent spectrum with a peak by zero phonon line (ZPL) around 575 nm and/or around 637 nm, and for example, an excitation at 532 nm gives a wide fluorescent spectrum approximately from 550 to 800 nm. For example, use of a heteroatom that is not directly related to fluorescence of phosphorus, boron, or the like is preferable for doping because the N-V center intensity may be increased. In a more preferred embodiment of the present invention, the fluorescence emission peak of Si-doped nanodiamond particles has a sharp peak of approximately 738 nm, which is called zero-phonon line (ZPL). Note that, the ZPL of Ge-V is approximately 602 nm, the ZPL of Sn-V is approximately 620 nm, and the ZPL of Pb-V is approximately 552 nm.

The concentration of at least one type of the Heteroatom-V centers in the heteroatom-doped nanodiamond particles produced by the production method according to an embodiment of the present invention is preferably 1 × 10¹⁰/cm³ or greater, and more preferably from 2 × 10¹⁰ to 1 × 10¹⁹/cm³. When the nanodiamond contains two or more Heteroatom-V centers, the concentration of the Heteroatom-V centers is a total concentration thereof. It is presumed that the concentration of the Heteroatom-V center can be determined using, for example, a confocal laser scanning microscope or a fluorescence and absorbance spectrometer. Note that, for determination of the concentration of Heteroatom-V center by fluorescence and absorbance spectrometry, a literature (DOI 10.1002/pssa.201532174) can be used as a reference.

The heteroatom compound is a compound containing at least one type of heteroatom (an atom other than carbon) and may be an organic compound or an inorganic compound.

The average size of the primary particles of the heteroatom-doped nanodiamond produced by the production method according to an embodiment of the present invention is preferably from 2 to 70 nm, more preferably from 2.5 to 60 nm, even more preferably from 3 to 55 nm, and particularly preferably from 3.5 to 50 nm. The average size of the primary particles can be determined by Scherrer equation based on the analysis result of the powder X-ray diffractometry (XRD). Examples of a measurement instrument of XRD include the Multipurpose X-ray Diffraction System with Built-in Intelligent Guidance (available from Rigaku Corporation).

The carbon content of the heteroatom-doped nanodiamond particles produced by the production method according to an embodiment of the present invention is preferably from 70 to 99 mass%, more preferably from 75 to 98 mass%, and even more preferably from 80 to 97 mass%.

The hydrogen content of the heteroatom-doped nanodiamond particles produced by the production method according to an embodiment of the present invention is preferably from 0.1 to 5 mass%, more preferably from 0.2 to 4.5 mass%, and even more preferably from 0.3 to 4.0 mass%.

The nitrogen content of the heteroatom-doped nanodiamond particles produced by the production method according to an embodiment of the present invention is preferably from 0.1 to 5 mass%, more preferably from 0.2 to 4.5 mass%, and even more preferably from 0.3 to 4.0 mass%.

The contents of carbon, hydrogen, and nitrogen of the heteroatom-doped nanodiamond produced by the production method according to an embodiment of the present invention can be measured by elementary analysis.

The heteroatom content of the heteroatom-doped nanodiamond produced by the production method according to an embodiment of the present invention is preferably from 0.0001 to 10.0 mass%, more preferably from 0.0001 to 5.0 mass%, and even more preferably from 0.0001 to 1.0 mass%. The heteroatom content can be measured by, for example, inductively-coupled plasma emission spectrometry (ICP-AES), XRF, secondary ion mass spectrometry (SIMS), and after alkali fusion, the heteroatom-doped nanodiamond can be quantified as an acidic solution. Furthermore, when the nanodiamond contains two or more heteroatoms, the content of the heteroatoms is a total content thereof.

For the heteroatom-doped nanodiamond particles produced by the production method according to a preferred embodiment of the present invention, characteristic peaks of diamond, graphite, surface hydroxy groups (OH), and surface carbonyl groups (CO) can be identified in a chart of Raman shift by Raman spectroscopy. The characteristic peak of diamond in a Raman shift chart is at a wave number from 1100 to 1400 cm⁻¹, the characteristic peak of graphite is at a wave number from 1450 to 1700 cm⁻¹, the characteristic peak of surface hydroxy groups (OH) is at a wave number from 1500 to 1750 cm⁻¹, and the characteristic peak of surface carbonyl groups (CO) is at a wave number from 1650 to 1800 cm⁻¹. The areas of characteristic peaks of diamond, graphite, a surface hydroxy group (OH), and a surface carbonyl group (CO) can be determined by Raman spectrometer. The laser wavelength of the Raman light source is, for example, 325 nm or 488 nm. An example of the Raman spectrometer that can be used includes a confocal microscopic Raman spectrometer (e.g., trade name: LabRAM HR Evolution, a microscopic laser Raman spectrometer available from Horiba, Ltd.).

In the heteroatom-doped nanodiamond particles produced by the production method according to a preferred embodiment of the present invention, the ratio of D/G, with D representing the peak area of diamond and G representing the peak area of graphite, is preferably from 0.2 to 9, more preferably from 0.3 to 8, and even more preferably from 0.5 to 7.

In the heteroatom-doped nanodiamond particles produced by the production method according to a preferred embodiment of the present invention, the ratio of H/D, with H representing the peak area of surface hydroxy group (OH) and D representing the peak area of diamond, is preferably from 0.1 to 5, more preferably from 0.1 to 4.0, and even more preferably from 0.1 to 3.0.

In the heteroatom-doped nanodiamond particles produced by the production method according to a preferred embodiment of the present invention, the ratio of C/D, with C representing the peak area of surface carbonyl group (CO) and D representing the peak area of diamond, is preferably from 0.01 to 1.5, more preferably from 0.03 to 1.2, and even more preferably from 0.05 to 1.0.

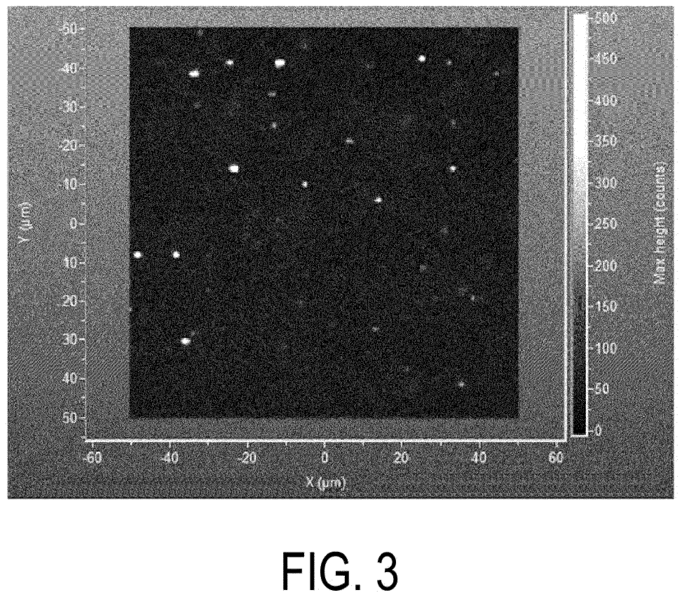

A literature (e.g., Vadym N. Mochalin et al., NATURE NANOTECHNOLOGY, 7 (2012) 11-23, especially Figure 3) can be used as a reference for the Raman analysis method for the nanodiamond particles.

In another preferred embodiment of the present invention, the surface of the heteroatom-doped nanodiamond particles produced by the production method according to an embodiment of the present invention may have at least one type of oxygen functional group terminal and/or at least one type of hydrogen terminal. Examples of the oxygen functional group terminal include OH, COOH, CONH₂, C=O, and CHO, among which OH, C=O, and COOH are preferred. Examples of the hydrogen terminal include alkyl groups having from 1 to 20 carbons.

Presence of at least one type of the oxygen functional group terminal on the surface of the heteroatom-doped nanodiamond particles produced by the production method according to an embodiment of the present invention suppresses aggregation of the nanodiamond particles, and hence is preferred. Presence of at least one type of the hydrogen terminal on the surface of the heteroatom-doped nanodiamond particles produced by the production method according to an embodiment of the present invention allows for the zeta potential to become positive and allows for stable and high level of dispersion in an acidic aqueous solution, and hence is preferred.

In another preferred embodiment of the present invention, the heteroatom-doped nanodiamond particles produced by the production method according to an embodiment of the present invention may have a core-shell structure. The core of the heteroatom-doped nanodiamond particle that is produced by the production method according to an embodiment of the present invention and that has a core-shell structure is a nanodiamond particle doped with at least one type of heteroatom. This core is preferably a core having the Heteroatom-V center and emitting fluorescence. The shell is a non-diamond cover layer, may contain a sp² carbon, and preferably further contains an oxygen atom. The shell may be a graphite layer. The thickness of the shell is preferably 5 nm or less, more preferably 3 nm or less, and even more preferably 1 nm or less. The shell may have a hydrophilic functional group on its surface.

The shape of the heteroatom-doped nanodiamond particles produced by the production method according to an embodiment of the present invention is preferably a spherical shape, an ellipsoidal shape, or a polyhedral shape close to the foregoing.

In the production method according to an embodiment of the present invention, mixing of the explosive and the heteroatom compound in the detonation method may be performed in the presence or absence of a solvent, and formation can be performed by pressing or casting after the mixing.

The average particle diameters of the explosive and the heteroatom compound are preferably 10 mm or less, more preferably 5 mm or less, and even more preferably 1 mm or less. Note that these average particle diameters can be measured by laser diffraction/scattering methods, by an optical microscope, or by Raman method.

The product resulting from explosion can be further subjected to purification and post treatment according to an embodiment of the present invention. The purification can include one or both of a mixed acid treatment and an alkali treatment. A preferred purification is a mixed acid treatment.

When the explosive composition containing the explosive and the heteroatom compound is exploded in a container, in addition to the heteroatom-doped nanodiamonds, for example, graphite, metal impurities, the elemental heteroatom, and heteroatom oxides are generated. Graphite and metal impurities can be removed by the mixed acid treatment. In the case where the heteroatom is a Group 14 element such as Si, Ge, Sn, or Pb, elemental Group 14 elements (Si, Ge, Sn, Pb) and Group 14 element oxides (e.g., SiO₂, GeO₂, SnO, SnO₂, PbO, PbO₂) can be removed by the alkali treatment.

Examples of the mixed acid include a mixed acid of concentrated sulfuric acid and concentrated nitric acid, and the mixed acid is preferably a mixed acid of concentrated sulfuric acid concentrated nitric acid = 1: 1 (volume ratio). The temperature for the mixed acid treatment is from 50 to 200°C, and the duration of the mixed acid treatment is from 0.5 to 24 hours.

Examples of the alkali include alkali metal hydroxides, such as sodium hydroxide and potassium hydroxide. The temperature of the alkali treatment is from 30 to 150°C, and the duration of the alkali treatment is from 0.5 to 24 hours.

The post treatment can include annealing. The heteroatom that is incorporated in the heteroatom-doped nanodiamond and vacancy are brought into contact by the annealing treatment, and thus the Heteroatom-V center can be formed. Vacancy formation may be performed before the annealing although such vacancy formation is an optional process. The vacancy formation is performed by irradiation with an ion beam or an electron beam. Even in the case where no vacancy formation is performed, the Heteroatom-V center is formed by annealing; however, by annealing after the vacancy formation, more Heteroatom-V centers can be formed. For the density of vacancies to be introduced by ion beam irradiation or electron beam irradiation, the upper limit is limited by a concentration at which the diamond is broken (a vacancy concentration of > 1 × 10²¹/cm³), but the lower limit is, for example, 1 × 10¹⁶/cm³ or higher, or even 1 × 10¹⁸/cm³ or higher. The ion beam is preferably an ion beam of hydrogen (H) or helium (He). For example, the energy of the ion beam of hydrogen is preferably from 10 to 1500 keV, and the energy of the ion beam of helium is preferably from 20 to 2000 keV. The energy of the electron beam is preferably from 500 to 5000 keV.

The temperature of the annealing is preferably 800°C or higher, and the annealing time is 30 minutes or longer.

The explosive is not particularly limited, and known explosives can be widely used. Specific examples thereof include trinitrotoluene (TNT), cyclotrimethylene trinitramine (hexogen, RDX), cyclotetramethylene tetranitramine (octogen), trinitrophenyl methylnitramine (tetryl), pentaerythritol tetranitrate (PETN), tetranitromethane (TNM), triamino-trinitrobenzene, hexanitrostilbene, and diaminodinitrobenzofuroxan. One type of these can be used alone, or two or more types of these can be used in combination.

The heteroatom compounds specifically exemplified below are mere examples, and publicly known heteroatom compounds can be widely used.

In the case where the heteroatom is silicon, examples of the organic silicon compound include the following:
- silane having a lower alkyl group, such as acetoxytrimethylsilane, diacetoxydimethylsilane, triacetoxymethylsilane, acetoxytriethylsilane, diacetoxydiethylsilane, triacetoxyethylsilane, acetoxytripropylsilane, methoxytrimethylsilane, dimethoxydimethylsilane, trimethoxymethylsilane, ethoxytrimethylsilane, diethoxydimethylsilane, triethoxymethylsilane, ethoxytriethylsilane, diethoxydiethylsilane, triethoxyethylsilane, and trimethylphenoxysilane;
- silane having a halogen atom, such as trichloromethylsilane, dichlorodimethylsilane, chlorotrimethylsilane, trichloroethylsilane, dichlorodiethylsilane, chlorotriethylsilane, trichlorophenylsilane, dichlorodiphenylsilane, chlorotriphenylsilane, dichlorodiphenylsilane, dichloromethylphenylsilane, dichloroethylphenylsilane, chlorodifluoromethylsilane, dichlorofluoromethylsilane, chlorofluorodimethylsilane, chloroethyldifluorosilane, dichloroethylfluorosilane, chlorodifluoropropylsilane, dichlorofluoropropylsilane, trifluoromethylsilane, difluorodimethylsilane, fluorotrimethylsilane, ethyltrifluorosilane, diethyldifluorosilane, triethylfluorosilane, trifluoropropylsilane, fluorotripropylsilane, trifluorophenylsilane, difluorodiphenylsilane, fluorotriphenylsilane, tribromomethylsilane, dibromodimethylsilane, bromotrimethylsilane, bromotriethylsilane, bromotripropylsilane, dibromodiphenylsilane, and bromotriphenylsilane;
- polysilane, such as hexamethyldisilane, hexaethyldisilane, hexapropyldisilane, hexaphenyldisilane, and octaphenylcyclotetrasilane;
- silazane, such as triethylsilazane, tripropylsilazane, triphenylsilazane, hexamethyldisilazane, hexaethyldisilazane, hexaphenyldisilazane, hexamethylcyclotrisilazane, octamethylcyclotetrasilazane, hexaethylcyclotrisilazane, octaethylcyclotetrasilazane, and hexaphenylcyclotrisilazane;
- aromatic silane in which a silicon atom is incorporated in an aromatic ring, such as silabenzene and disilabenzene;
- hydroxy group-containing silane, such as trimethylsilanol, dimethylphenylsilanol, triethylsilanol, diethylsilanediol, tripropylsilanol, dipropylsilanediol, triphenylsilanol, and diphenylsilanediol;
- alkyl- or aryl-substituted silane, such as tetramethylsilane, ethyltrimethylsilane, trimethylpropylsilane, trimethylphenylsilane, diethyldimethylsilane, triethylmethylsilane, methyltriphenylsilane, tetraethylsilane, triethylphenylsilane, diethyldiphenylsilane, ethyltriphenylsilane, and tetraphenylsilane;
- carboxyl group-containing silane, such as triphenylsilylcarboxylic acid, trimethylsilyl acetic acid, trimethylsilylpropionic acid, and trimethylsilylbutyric acid;
- siloxane, such as hexamethyldisiloxane, hexaethyldisiloxane, hexapropyldisiloxane, and hexaphenyldisiloxane;
- silane having an alkyl group or an aryl group and a hydrogen atom, such as methylsilane, dimethylsilane, trimethylsilane, diethylsilane, triethylsilane, tripropyl silane, diphenylsilane, and triphenylsilane; and
- tetrakis(chloromethyl)silane, tetrakis(hydroxymethyl)silane, tetrakis(trimethylsilyl)silane, tetrakis(trimethylsilyl)methane, tetrakis(dimethylsilanolyl)silane, tetrakis(tri(hydroxymethyl)silyl)silane, and tetrakis(nitratemethyl)silane.

Examples of the inorganic silicon compound include silicon oxide, silicon oxynitride, silicon nitride, silicon oxycarbide, silicon nitrocarbide, silane, and carbon materials doped with silicon. Examples of the carbon material doped with silicon include black lead, graphite, active carbon, carbon black, ketjen black, coke, soft carbon, hard carbon, acetylene black, carbon fibers, and mesoporous carbon.

Examples of the boron compounds include inorganic boron compounds and organic boron compounds.

Examples of the inorganic boron compound include orthoboric acid, diboron dioxide, diboron trioxide, tetraboron trioxide, tetraboron pentoxide, boron tribromide, tetrafluoroboric acid, ammonium borate, and magnesium borate.

Examples of the organic boron compound include triethylborane, (R)-5,5-diphenyl-2-methyl-3,4-propano-1,3,2-oxazaborolidine, triisopropyl borate, 2-isopropoxy-4,4,5,5-tetramethyl-1,3,2-dioxaborolane, bis(hexylene glycolato)diboron, 4-(4,4,5,5-tetramethyl-1,3,2-dioxaborolan-2-yl)-1H-pyrazole, tert-butyl-N-[4-(4,4,5,5-tetramethyl-1,2,3-dioxaborolan-2-yl)phenyl]carbamate, phenylboronic acid, 3-acetylphenylboronic acid, boron trifluoride-acetic acid complex, boron trifluoride-sulfolane complex, 2-thiopheneboronic acid, and tris(trimethylsilyl) borate.

Examples of the phosphorus compounds include inorganic phosphorus compounds and organic phosphorus compounds. Examples of the inorganic phosphorus compound include ammonium polyphosphate.

Examples of the organic phosphorus compound include phosphates, such as trimethyl phosphate, triethyl phosphate, tripropyl phosphate, tributyl phosphate, tripentyl phosphate, trihexyl phosphate, dimethylethyl phosphate, methyldibutyl phosphate, ethyldipropyl phosphate, 2-ethylhexyldi(p-tolyl) phosphate, bis(2-ethylhexyl)p-tolyl phosphate, tritolylphosphate, di(dodecyl)p-tolyl phosphate, tris(2-butoxyethyl)phosphate, tricyclohexyl phosphate, triphenyl phosphate, ethyldiphenyl phosphate, dibutylphenyl phosphate, phenylbisdodecyl phosphate, cresyldiphenyl phosphate, tricresyl phosphate, p-tolylbis(2,5,5'-trimethylhexyl) phosphate, cresyl-2,6-xylenyl phosphate, trixylenyl phosphate, hydroxyphenyldiphenyl phosphate, tris(t-butylphenyl) phosphate, tris(i-propylphenyl) phosphate, 2-ethylhexyldiphenyl phosphate, bis(2-ethylhexyl)phenyl phosphate, tri(nonylphenyl) phosphate, and phenyl bisneopentyl phosphate;
condensed phosphates, such as 1,3-phenylene bis(diphenyl phosphate), 1,4-phenylene bis(dixylenyl phosphate), 1,3-phenylene bis(3,5,5'-trimethylhexyl phosphate), bisphenol A bis(diphenyl phosphate), 4,4'-biphenyl bis(dixylenyl phosphate), and 1,3,5-phenylene tris(dixylenyl phosphate);
phosphites, such as trimethyl phosphite, triethyl phosphite, triphenyl phosphite, and tricresyl phosphite; and
phosphites, such as 1,3-phenylene bis(diphenyl phosphite), 1,3-phenylene bis(dixylenyl phosphite), 1,4-phenylene bis(3,5,5'-trimethylhexyl phosphite), bisphenol A bis(diphenyl phosphite), 4,4'-biphenyl bis(dixylenyl phosphite), and 1,3,5-phenylene tris(dixylenyl phosphite).

Examples of the germanium compound include: organic germanium compounds, such as methylgermane, ethylgermane, trimethylgermanium methoxide, dimethylgermanium diacetate, tributylgermanium acetate, tetramethoxygermanium, tetraethoxygermanium, isobutylgermane, alkylgermanium trichloride, and dimethylaminogermanium trichloride; germanium complexes, such as nitrotriphenol complex [Ge₂(ntp)₂O], catechol complex [Ge(cat)₂], or aminopyrene complex [Ge₂(ap)₂Cl₂]; and germanium alkoxides, such as germanium ethoxide and germanium tetrabutoxide.

Examples of the tin compound include inorganic tin compounds, such as tin(II) oxide, tin(IV) oxide, tin(II) sulfide, tin(IV) sulfide, tin(II) chloride, tin(IV) chloride, tin(II) bromide, tin(II) fluoride, tin acetate, and tin sulfate; alkyl tin compounds, such as tetramethyltin; monoalkyltin oxide compounds, such as monobutyltin oxide; dialkyltin oxide compounds, such as dibutyltin oxide; aryltin compounds, such as tetraphenyltin; and organic tin compounds, such as dimethyltin maleate, hydroxybutyltin oxide, and monobutyltin tris(2-ethylhexanoate).

Examples of the nickel compound include divalent nickel halides, such as nickel(II) chloride, nickel(II) bromide, and nickel(II) iodide, inorganic nickel compounds, such as nickel(II) acetate and nickel(II) carbonate, and organic nickel compounds, such as nickel bis(ethyl acetoacetate) and nickel bis(acetylacetonate).

Examples of the titanium compound include inorganic titanium compounds, such as titanium dioxide, titanium nitride, strontium titanate, lead titanate, barium titanate, and potassium titanate; tetraalkoxy titanium, such as tetraethoxy titanium, tetraisopropoxy titanium, and tetrabutyloxy titanium; and organic titanium compounds, such as tetraethylene glycol titanate, di-n-butyl bis(triethanolamine) titanate, di-isopropoxy titanium bis(acetylacetonate), isopropoxy titanium octanoate, isopropyl titanium trimethacrylate, isopropyl titanium triacrylate, isopropyl triisostearoyl titanate, isopropyl tridecylbenzenesulfonyl titanate, isopropyl tris(butylmethylpyrophosphate) titanate, tetraisopropyl di(dilaurylphosphite) titanate, dimethacryloxy acetate titanate, diacryloxy acetate titanate, di(dioctylphosphate)ethylene titanate, isopropoxy titanium tri(dioctylphosphate), isopropyl tris(dioctylpyrophosphate) titanate, tetraisopropyl bis(dioctylphosphite) titanate, tetraoctyl bis(ditridecylphosphite) titanate, tetra(2,2-diallyloxymethyl-1-butyl) bis(di-tridecyl)phosphite titanate, bis(dioctylpyrophosphate)oxyacetate titanate, tris(dioctylpyrophosphate)ethylene titanate, isopropyltri-n-dodecylbenzene sulfonyl titanate, isopropyltrioctanoyl titanate, isopropyldimethacryloyl isostearoyl titanate, isopropylisostearoyldiacryl titanate, isopropyltri(dioctylphosphate) titanate, isopropyltricumylphenyl titanate, and isopropyltri(N-aminoethyl-aminoethyl) titanate.

Examples of the cobalt compound include: inorganic cobalt compounds, such as cobalt salts of inorganic acids, cobalt halides, cobalt oxide, cobalt hydroxide, dicobalt octacarbonyl, cobalt hydrogen tetracarbonyl, tetracobalt dodecacarbonyl, and alkylidyne tricobalt nonacarbonyl; cobalt tris (ethyl acetoacetate); cobalt tris(acetylacetonate); organic acid salts of cobalt [e.g., acetates, propionates, cyanides, naphthenates, and stearates; alkyl sulfonates (e.g., C₆₋₁₈ alkylsulfonates), such as methanesulfonate, ethanesulfonate, octanesulfonate, and dodecanesulfonate; aryl sulfonates that may be substituted with an alkyl group (e.g., C₆₋₁₈ alkyl-aryl sulfonates), such as benzenesulfonate, p-toluenesulfonate, naphthalene sulfonate, decylbenzene sulfonate, and dodecylbenzene sulfonate)]; and organic cobalt complexes. Examples of the ligand constituting a complex include hydroxy (OH), alkoxy (e.g., methoxy, ethoxy, propoxy, and butoxy), acyl (e.g., acetyl and propionyl), alkoxy carbonyl (e.g., methoxy carbonyl and ethoxy carbonyl), acetylacetonate, a cyclopentadienyl group, halogen atoms (e.g., chlorine and bromine), CO, CN, an oxygen atom, aquo (H₂O), phosphorus compounds such as phosphine (e.g., triaryl phosphines, such as triphenylphosphine), and nitrogen-containing compounds, such as ammine (NH₃), NO, nitro (NO₂), nitrato (NO₃), ethylenediamine, diethylenetriamine, pyridine, and phenanthroline.

Examples of the xenon compound include fluorides such as XeF₂, XeF₄, XeF₆, XeOF₂, XeOF₄, and XeO₂F₄, oxides such as XeO₃ and XeO₄, xenic acid Xe(OH)₆ and its salt Ba₃XeO₆, perxenic acid H₄XeO₆ and its salt Na₄XeO₆, complexes with metal carbonyl M(CO)sXe (M = Cr, Mo, W), and hydrates.

Examples of the chromium compound include chromium acetylacetone complexes, such as acetylacetone chromium; chromium alkoxide, such as chromium(III) isopropoxide; organic acid chromium, such as chromium(II) acetate and diacetic acid hydroxychromium(III) salt; organic chromium compounds, such as tris(allyl) chromium, tris(methallyl) chromium, tris(crotyl) chromium, bis(cyclopentadienyl) chromium (i.e. chromocene), bis(pentamethylcyclopentadienyl) chromium (i.e. decamethylchromocene), bis(benzene) chromium, bis(ethylbenzene) chromium, bis(mesitylene) chromium, bis(pentadienyl) chromium, bis(2,4-dimethylpentadienyl) chromium, bis(allyl)tricarbonyl chromium, (cyclopentadienyl)(pentadienyl) chromium, tetra(1-norbornyl) chromium, (trimethylenemethane)tetracarbonyl chromium, bis(butadiene)dicarbonyl chromium, (butadiene)tetracarbonyl chromium, and bis(cyclooctatetraene) chromium.

Examples of the tungsten compound include inorganic tungsten compounds, such as tungsten trioxide, ammonium tungstate, and sodium tungstate; and organic tungsten compounds, such as tungsten complexes coordinated with boron atoms, such as one coordinated with ethylborylethylidene ligands; tungsten complexes coordinated with carbon atoms, such as one coordinated with carbonyl ligands, cyclopentadienyl ligands, alkyl group ligands, and olefin-based ligands; tungsten complexes coordinated with nitrogen atoms, such as one coordinated with pyridine ligands and acetonitrile ligands; tungsten complexes coordinated with phosphorus atoms, such as one coordinated with phosphine ligands and phosphite ligands; and tungsten complexes coordinated with sulfur atoms, such as one coordinated with diethyl carbamodithioato ligands.

Examples of the thallium compound include inorganic thallium compounds, such as thallium nitrate, thallium sulfate, thallium fluoride, thallium chloride, thallium bromide, and thallium iodide; organic thallium compounds, such as trialkyl thallium, such as trimethyl thallium, triethyl thallium, and triisobutyl thallium; aryl thallium, such as dialkyl thallium halide, alkenyl dialkyl thallium, alkynyl dialkyl thallium, triphenyl thallium, and tritolyl thallium; diaryl thallium halide, thallium 2-ethylhexanoate, thallium malonate, thallium formate, thallium ethoxide, and thallium acetylacetonate.

Examples of the zirconium compound include inorganic zirconium compounds, such as zirconium nitrate, zirconium sulfate, zirconium carbonate, zirconium hydroxide, zirconium fluoride, zirconium chloride, zirconium bromide, and zirconium iodide; and organic zirconium compounds, such as zirconium n-propoxide, zirconium n-butoxide, zirconium t-butoxide, zirconium isopropoxide, zirconium ethoxide, zirconyl acetate, zirconium acetylacetonate, zirconium butoxyacetylacetonate, zirconium bisacetylacetonate, zirconium ethylacetoacetate, zirconium acetylacetonate bisethylacetoacetate, zirconium hexafluoroacetylacetonate, and zirconium trifluoroacetylacetonate.

Examples of the zinc compound include diethylzinc, dimethylzinc, zinc acetate, zinc nitrate, zinc stearate, zinc oleate, zinc palmitate, zinc myristate, zinc dodecanoate, zinc acetylacetonate, zinc chloride, zinc bromide, zinc iodide, and zinc carbamate.

Examples of the silver compound include organic silver compounds, such as silver acetate, silver pivalate, silver trifluoromethanesulfonate, and silver benzoate; and inorganic silver compounds, such as silver nitrate, silver fluoride, silver chloride, silver bromide, silver iodide, silver sulfate, silver oxide, silver sulfide, silver tetrafluoroborate, silver hexafluorophosphate (AgPF₆), and silver hexafluoroantimonate (AgSbF6).

Examples of the lead compound include inorganic lead compounds, such as lead monoxide (PbO), lead dioxide (PbO₂), minium (Pb₃O₄), white lead (2PbCO₃-Pb(OH)₂), lead nitrate (Pb(NO₃)₂), lead chloride (PbCh), lead sulfide (PbS), chrome yellow (PbCrO₄, Pb(SCr)O₄, PbO-PbCrO₄), lead carbonate (PbCO₃), lead sulfate (PbSO₄), lead fluoride (PbF₂), lead tetrafluoride (PbF₄), lead bromide (PbBr₂), and lead iodide (PbI₂); and organic lead compounds, such as lead acetate (Pb(CH₃COO)₂), lead tetracarboxylate (Pb(OCOCH₃)₄), tetraethyl lead (Pb(CH₃CH₂)₄), tetramethyl lead (Pb(CH₃)₄), and tetrabutyl lead (Pb(C₄H₉)₄).

Examples of the aluminum compound include inorganic aluminum compounds, such as aluminum oxide; alkoxy compounds, such as trimethoxy aluminum, triethoxy aluminum, isopropoxy aluminum, isopropoxydiethoxy aluminum, and tributoxy aluminum; acyloxy compounds, such as triacetoxy aluminum, tristearate aluminum, and tributyrate aluminum; and organic aluminum compounds, such as aluminum isopropylate, aluminum sec-butylate, aluminum tert-butylate, aluminum tris(ethylacetoacetate), tris(hexafluoroacetylacetonate) aluminum, tris(ethylacetoacetate) aluminum, tris(n-propylacetoacetate) aluminum, tris(iso-propylacetoacetate) aluminum, tris(n-butylacetoacetate) aluminum, tris(salicylaldehyde) aluminum, tris(2-ethoxycarbonylphenolate) aluminum, tris(acetylacetonate) aluminum, trialkyl aluminum compounds, such as trimethyl aluminum, triethyl aluminum, and triisobutyl aluminum, dialkyl aluminum halide, alkenyl dialkyl aluminum, alkynyl dialkyl aluminum, aryl aluminum such as triphenyl aluminum and tritolyl aluminum, and diaryl aluminum halides.

Examples of the vanadium compound include vanadic acid and metavanadic acid and inorganic vanadium compounds of alkali metal salts of these; alkoxides, such as triethoxyvanadyl, pentaethoxy vanadium, triamyloxyvanadyl, and triisopropoxyvanadyl; acetonates, such as bisacetylacetonate vanadyl, vanadium acetylacetonate, vanadyl acetylacetonate, and vanadium oxyacetylacetonate; and organic vanadium compounds, such as vanadium stearate, vanadium pivalate, and vanadium acetate.

Examples of the niobium compound include halides such as niobium(V) chloride and niobium(V) fluoride; inorganic niobium compounds, such as niobium sulfate, niobic acid, and niobate; and organic niobium compounds, such as niobium alkoxide.

Examples of the tantalum compound include inorganic tantalum compounds, such as TaCl₅ and TaFs; and organic tantalum compounds, such as Ta(OC₂H₅)₅, Ta(OCH₃)₅, Ta(OC₃H₇)₅, Ta(OC₄H₉)₅, (C₅H₅)₂TaH₃, and Ta(N(CH₃)₂)₅.

Examples of the molybdenum compound include inorganic molybdenum compounds, such as molybdenum trioxide, zinc molybdate, ammonium molybdate, magnesium molybdate, calcium molybdate, barium molybdate, sodium molybdate, potassium molybdate, phosphomolybdic acid, ammonium phosphomolybdate, sodium phosphomolybdate, silicomolybdic acid, molybdenum disulfide, molybdenum diselenide, molybdenum ditelluride, molybdenum boride, molybdenum disilicide, molybdenum nitride, and molybdenum carbide; and organic molybdenum compounds, such as molybdenum dialkyldithiophosphate and molybdenum dialkyldithiocarbamate.

Examples of the manganese compound include inorganic manganese compounds, such as hydroxides, nitrates, acetates, sulfates, chlorides, and carbonates of manganese; and organic manganese compounds including manganese oxalate, acetylacetonate compounds, and a manganese alkoxide such as methoxide, ethoxide, or butoxide.

Examples of the iron compound include inorganic iron compounds, such as iron(II) fluoride, iron(III) fluoride, iron(II) chloride, iron(III) chloride, iron(II) bromide, iron(III) bromide, iron(II) iodide, iron(III) iodide, iron(II) oxide, iron(III) oxide, triiron(II, III) tetroxide, iron(II) sulfate, iron(III) sulfate, iron(II) nitrate, iron(III) nitrate, iron(II) hydroxide, iron(III) hydroxide, iron(II) perchlorate, iron(III) perchlorate, ammonium iron(II) sulfate, ammonium iron(III) sulfate, iron(III) tungstate oxide, iron(III) tetravanadate, iron(II) selenide, iron(II) titanium trioxide, diiron(III) titanium pentoxide, iron(II) sulfide, iron(III) sulfide, diiron(II) phosphide, triiron(II) phosphide, and iron(III) phosphide; and organic iron compounds, such as iron(II) acetate, iron(III) acetate, iron(II) formate, iron(III) triformate, iron(II) tartrate, sodium iron(III) tartrate, iron(II) lactate, iron(II) oxalate, iron(III) oxalate, ammonium iron(III) citrate, iron(III) laurate, iron(III) stearate, iron(III) tripalmitate, potassium hexacyanoferrate(II), potassium hexacyanoferrate(III), bis(2,4-pentanedionato)diaqua iron(II), tris(2,4-pentanedionato) iron(III), potassium tris(oxalato)ferrate (III), iron(III) tris(trifluoromethanesulfonate), iron(III) p-toluenesulfonate, iron(III) dimethyldithiocarbamate, iron(III) diethyldithiocarbamate, and ferrocene.

Examples of the copper compound include organic copper compounds, such as copper oxalate, copper stearate, copper formate, copper tartrate, copper oleate, copper acetate, copper gluconate, and copper salicylate; and inorganic copper compounds, such as copper carbonate, copper chloride, copper bromide, copper iodide, copper phosphate, and natural minerals such as hydrotalcite, stichtite, and pyrolite.

Examples of the cadmium compound include inorganic cadmium compounds, such as cadmium fluoride, cadmium chloride, cadmium bromide, cadmium iodide, cadmium oxide, and cadmium carbonate; and organic cadmium compounds such as cadmium phthalate and cadmium naphthalate.

Examples of the mercury compound include inorganic mercury compounds, such as mercury(II) chloride, mercury sulfate, and mercury(II) nitrate; and organic mercury compounds, such as methyl mercury, methylmercuric chloride, ethyl mercury, ethylmercuric chloride, phenylmercuric acetate, thimerosal, para-chloromercuribenzoate, and fluorescein mercuric acetate.

Examples of the gallium compound include organic gallium compounds, such as tetraphenyl gallium and tetrakis(3,4,5-trifluorophenyl) gallium; and inorganic gallium compounds, such as gallium oxoate, gallium halides, gallium hydroxide, and gallium cyanide.

Examples of the indium compound include organic indium compounds, such as triethoxyindium, indium 2-ethylhexanoate, and indium acetylacetonate; and inorganic indium compounds, such as indium cyanide, indium nitrate, indium sulfate, indium carbonate, indium fluoride, indium chloride, indium bromide, and indium iodide.

Examples of the arsenic compound include inorganic arsenic compounds, such as diarsenic trioxide, diarsenic pentoxide, arsenic trichloride, arsenic pentoxide, and arsenious acid and arsenic acid and salts thereof, including sodium arsenite, ammonium arsenite, potassium arsenite, ammonium arsenate, and potassium arsenate; and organic arsenic compounds, such as cacodylic acid, phenylarsonic acid, diphenylarsonic acid, p-hydroxyphenylarsonic acid, p-aminophenylarsonic acid, and salts thereof, including sodium cacodylate and potassium cacodylate.

Examples of the antimony compound include inorganic antimony compounds, such as antimony oxide, antimony phosphate, KSb(OH), and NH₄SbF₆; and organic antimony compounds, such as antimony esters of organic acids, cyclic alkyl antimonite, and triphenylantimony.

Examples of the bismuth compound include organic bismuth compounds, such as triphenyl bismuth, bismuth 2-ethylhexanoate, and bismuth acetylacetonate; and inorganic bismuth compounds, such as bismuth nitrate, bismuth sulfate, bismuth acetate, bismuth hydroxide, bismuth fluoride, bismuth chloride, bismuth bromide, and bismuth iodide.

Examples of the selenium compound include organic selenium compounds, such as selenomethionine, selenocysteine, and selenocystine; and inorganic selenium compounds, such as alkali metal selenates such as potassium selenate, and alkali metal selenites such as sodium selenite.

Examples of the tellurium compound include telluric acid and salts thereof, tellurium oxide, tellurium chloride, tellurium bromide, tellurium iodide, and tellurium alkoxide.

Examples of the magnesium compound include organic magnesium compounds, such as ethyl acetoacetate magnesium monoisopropylate, magnesium bis(ethylacetoacetate), alkylacetoacetate magnesium monoisopropylate, and magnesium bis(acetylacetonate); and inorganic magnesium compounds, such as magnesium oxide, magnesium sulfate, magnesium nitrate, and magnesium chloride.

Examples of the calcium compound include organic calcium compounds, such as calcium 2-ethylhexanoate, calcium ethoxide, calcium methoxide, calcium methoxyethoxide, and calcium acetylacetonate; and inorganic calcium compounds, such as calcium nitrate, calcium sulfate, calcium carbonate, calcium phosphate, calcium hydroxide, calcium cyanide, calcium fluoride, calcium chloride, calcium bromide, and calcium iodide.

As the heteroatom compound in which the heteroatom is Li, Na, K, Cs, S, Sr, Ba, F, Y, or lanthanoids, a known organic or inorganic compound can be used.

One type of the heteroatom compound may be used alone, or two or more types of the heteroatom compounds may be used in combination.

The percentage of the explosive in the mixture containing the explosive and the heteroatom compound is preferably from 80 to 99.9999 mass%, more preferably from 85 to 99.999 mass%, even more preferably from 90 to 99.99 mass%, and particularly preferably from 95 to 99.9 mass%. The percentage of the heteroatom compound is preferably from 0.0001 to 20 mass%, more preferably from 0.001 to 15 mass%, even more preferably from 0.01 to 10 mass%, and particularly preferably from 0.1 to 5 mass%. Furthermore, the heteroatom content in the mixture containing the explosive and the heteroatom compound is preferably from 0.000005 to 10 mass%, more preferably from 0.00001 to 8 mass%, even more preferably from 0.0001 to 5 mass%, particularly preferably from 0.001 to 3 mass%, and most preferably from 0.01 to 1 mass%.

Mixing of the explosive and the heteroatom compound may be performed by powder mixing in the case where these are solids, by melting, or by mixing through dissolving or dispersing them in an appropriate solvent. They can be mixed by agitation, bead milling, an ultrasonic wave, or the like.

In one preferred embodiment, the explosive composition containing the explosive and the heteroatom compound further contains a cooling medium. The cooling medium may be any of a solid, a liquid, or a gas. Examples of the method of using the cooling medium include a method of detonating the mixture of the explosive and the heteroatom compound in the cooling medium. Examples of the cooling medium include inert gases (nitrogen, argon, and CO), water, ice, liquid nitrogen, aqueous solutions of heteroatom-containing salts, and crystalline hydrates. Examples of the heteroatom-containing salt include ammonium hexafluorosilicate, ammonium silicate, and tetramethylammonium silicate. For example, in a case where the cooling medium is water or ice, the cooling medium is preferably used in an amount approximately 5 times the weight of the explosive.

In one preferred embodiment of the present invention, the mixture containing the explosive and the heteroatom compound is transformed into diamonds through compression by shock wave under high pressure and high temperature conditions generated by explosion of the explosive (detonation). At the time of explosion of the explosive, the heteroatom is incorporated into the diamond lattice. The carbon source of the nanodiamonds can be the explosive and the organic heteroatom compound; however, in the case where the mixture containing the explosive and the heteroatom compound further contains a carbon material being free of heteroatoms, this carbon material may be the carbon source of the nanodiamonds.

The Si-doped nanodiamond particles according to an embodiment of the present invention can be produced by using a Si compound as the heteroatom compound in accordance with the production method according to an embodiment of the present invention.

### Examples

Hereinafter, the present invention will be described more specifically with reference to examples, but the present invention is not limited by these examples.

### (A) Method for Measuring Fluorescent ND

### (I) Sample Preparation

- Nanodiamond powder is dispersed in water to prepare a slurry. The concentration is 1 mass%.
- 1 µL of the nanodiamond slurry is added dropwise onto a piece of cover glass, and dried at room temperature. The dried sample forms a round shape on the surface of the cover glass. Fluorescence measurement is carried out in this state.

### (II) Fluorescence Measurement

### • Sample Placement

The sample is placed in a microscopic Raman spectrometer, and measurement is performed using a 100 × objective lens. The lens is focused on the surface of the sample, and the excitation light laser (532 nm) is focused on the surface of the sample.

### (B) Measurement Condition Settings

Mapping measurement is performed by a function called "Swift" that comes with the microscopic Raman apparatus.
Setting the ranges of fluorescence spectra to be measured:
In the case of SiV, the range is from 700 nm to 800 nm with a width of 100 nm;
In the case of GeV, the range is from 580 nm to 680 nm with a width of 100 nm.

The entire spectrum of the ZPL, the side band, or the like can be obtained within the width of 100 nm.

Setting the spots on the sample to be measured: fluorescence measurement is performed every 1 µm while moving laterally in a range of 100 µm × 100 µm. On the software of the apparatus, a total of 101 × 101 spots, that is, 10201 spots are measured.

Three spots, the center, the middle, and the outer circumference of the round sample, are measured
Laser wavelength: 532 nm
After the measurement is completed, fluorescence spectra of 10201 spots are obtained, and the spectra are analyzed.

### (C) Method for Analyzing Measurement Results of Fluorescence ND

### (I) Acquisition of Fluorescence Image

Using the numerical values of the fluorescence intensity within a certain width of the fluorescence spectra, the brightness corresponding to the numerical values is displayed as an image. By preparing this fluorescence image, it is possible to roughly estimate how much SiV or GeV, which is the target of preparation, exists.

In the case of SiV, the numerical values of the fluorescence intensity in the range of 738 nm ± 0.5 nm are used.

In the case of GeV, the numerical values of the fluorescence intensity in the range of 602 nm ± 0.5 nm are used.

### (II) Calculation of Percentage of Bright spots Based on the Presence and Absence of ZPL

The software of the microscopic Raman apparatus has a spectrum shape recognition function. By using this function, the presence or absence of ZPL can be distinguished. The ZPL may deviate depending on the structure of the fluorescent center, but if this shape recognition function is used, the presence or absence of the ZPL can be determined even if the ZPL deviates slightly. For the ZPL shape to be recognized, it is necessary to set the spectral shape, but not the wavelength.

Using the software, spots with a ZPL can be counted as bright spots, and the percentage of bright spots can be calculated.

### Example 1

A silicon-doped nanodiamond was produced in accordance with an ordinary method of nanodiamond production using approximately 1 kg of an explosive composition produced by adding 1 part by mass of triphenylsilanol as a heteroatom compound into 100 parts by mass of an explosive containing trinitrotoluene (TNT) and cyclotrimethylene trinitramine (RDX). For the resulting silicon-doped nanodiamonds, the following treatments were performed. Note that, the amount of triphenylsilanol added to the explosive was 1 mass%.

### (i) Mixed acid treatment

In 2800 g of a mixed acid of concentrated sulfuric acid concentrated nitric acid = 11:1 (weight ratio), 15 g of the nanodiamonds produced by the detonation test was added and treated at 150°C for 10 hours while being agitated.

### (ii) Alkali treatment

1 g of the nanodiamond that had been treated with the mixed acid was added to 100 mL of an 8 N sodium hydroxide aqueous solution, and the mixture was treated at 70°C for 8 hours while being stirred.

The resulting Si-doped nanodiamond raw material was subjected to an oxidation treatment in a gas atmosphere furnace for 2 hours at 570°C in a 4% oxygen atmosphere, resulting in Si-doped nanodiamond particles of the present invention. The yield after the oxidation treatment at 570°C was 4.6%.

### Example 2

The Si-doped nanodiamond particles produced in Example 1 were further subjected to a hydrogenation treatment for 5 hours at 550°C in a 2% hydrogen atmosphere. The yield after the hydrogenation treatment at 550°C was 93.5%, and the yield after the oxidation treatment at 570°C was 4.6%. As such, the total yield of the oxidation treatment at 570°C plus the hydrogenation treatment at 550°C was 4.3%.

### Comparative Examples 1 to 3

Si-doped nanodiamond particles were produced in the same manner as in Example 1 except that the oxidation treatment of Example 1 was performed at 470°C for 0 hours (before oxidation treatment, in Comparative Example 1), or for 0.5 hours (in Comparative Example 2), or for 2 hours (in Comparative Example 3).

### Test Example 1

The fluorescence intensity and the number of bright spots (at the central portion, the intermediate layer, and the outer circumferential portion) of the Si-doped nanodiamond particles produced in Examples 1 to 2 and Comparative Examples 1 to 3 were measured using a microscopic Raman spectrometer (product name: LabRAM HR Evolution, a microscopic laser Raman spectrometer available from Horiba, Ltd.) by performing high-speed mapping and bright spot imaging at 738 nm. Further, the average size of primary particles was measured based on the Scherrer equation by powder X-ray diffractometry (XRD) using the Multipurpose X-ray Diffraction System with Built-in Intelligent Guidance (available from Rigaku Corporation). Further, the amount of Si introduced was measured by XRF using an X-ray fluorescence spectrometer ZSX Primus IV which is available from Rigaku Corporation. Further, the peak area ratio of sp²-carbon to sp³-carbon was measured by microscopic Raman spectroscopy using a microscopic Raman spectrometer (product name: LabRAM HR Evolution, a microscopic laser Raman spectrometer available from Horiba, Ltd.). A 325-nm laser was used for the measurement, the peak area of sp²-carbon was determined by referring to the areas of peaks appearing near 1250 cm⁻¹ and 1328 cm⁻¹, and the peak area of sp³-carbon was determined by referring to the areas of peaks appearing near 1500 cm⁻¹ and 1590 cm⁻¹.

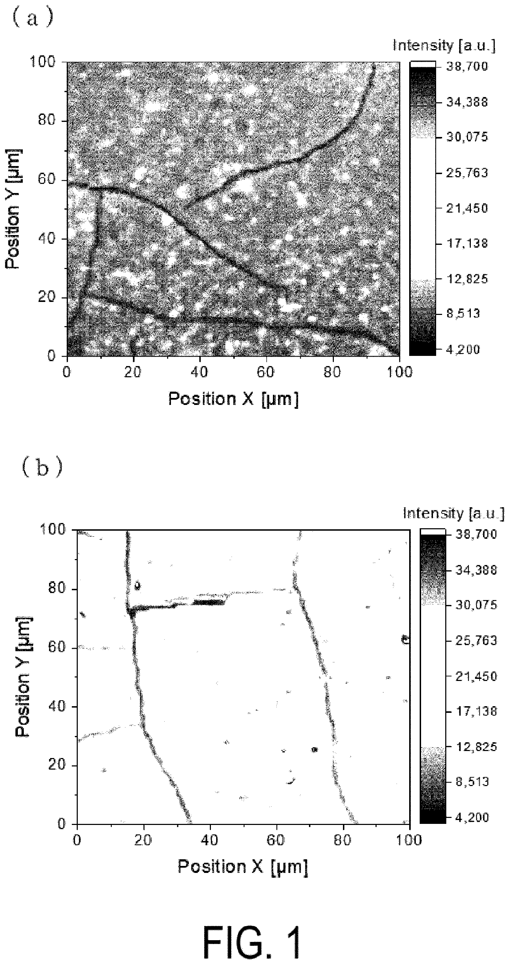

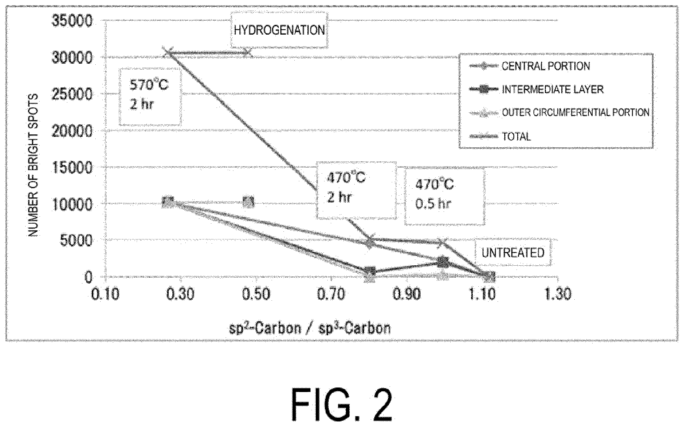

The results are presented in FIGS. 1 and 2 and Tables 1 and 2.

**[Table 1]**

| | Treatment Conditions | Treatment Apparatus | Average Particle Size of Primary Particles (nm) |
|---|---|---|---|
| Comparative Example 3 | 470°C, Ox (O₂) 2h | Gas Atmosphere Furnace | 8.1 |
| Example 1 | 570°C, Ox (O₂) 2h | Gas Atmosphere Furnace | 10.8 |
| Example 2 | 570°C, Ox (O₂) 2h | Gas Atmosphere Furnace | Not measured |
| | 550°C, Red (H₂) 5h | | |

**[Table 2]**

| Treatment Conditions | | sp²-Carbon/ sp³-Carbon | Number of Bright Spots | | | |
|---|---|---|---|---|---|---|
| Temperature Set (°C) | Treatment Time (hr) | | Central Portion | Intermediate Layer | Outer Circumferential Portion | Total |
| - | 0 | 1.12 | 0 | 0 | 0 | 0 |
| Gas-Phase Oxidation 470 | 0.5 | 1.00 | 2213 | 1997 | 381 | 4591 |
| | 2 | 0.80 | 4447 | 701 | 43 | 5191 |
| Gas-Phase Oxidation 570 | 2 | 0.27 | 10201 | 10201 | 10201 | 30603 |
| Gas-Phase Oxidation at 570°C | 5 | 0.48 | 10201 | 10201 | 10201 | 30603 |
| Followed by Hydrogenation (550°C) | | | | | | |

### Example 3

Ge-doped nanodiamond particles were produced in the same manner as in Example 1 except that 1 part by mass of tetraphenylgermane was used instead of 1 part by mass of triphenylsilanol used in Example 1, and that the oxidation treatment was carried out at 520°C for 2 hours.

### Comparative Example 4

Ge-doped nanodiamond particles were produced in the same manner as in Example 3 except that the oxidation treatment of Example 3 was performed at 470°C for 2 hours.

### Test Example 2

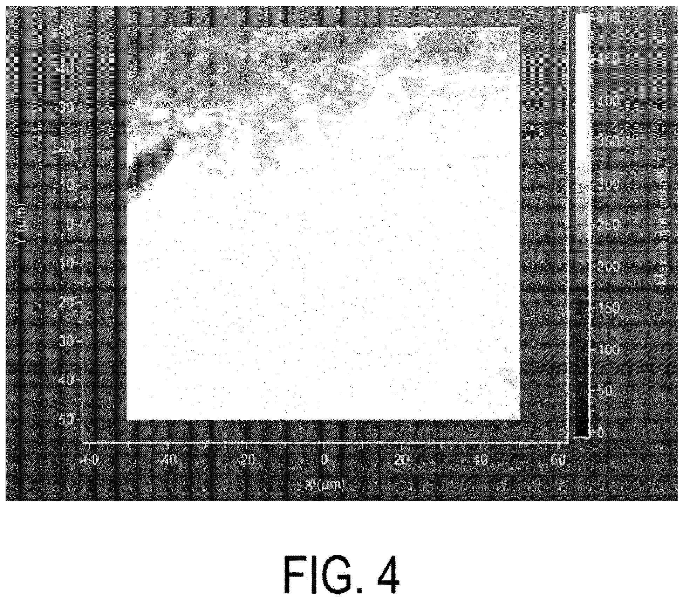

The fluorescence intensity and the number of bright spots (at the central portion) of the Ge-doped nanodiamond particles produced in Example 3 and Comparative Example 4 were measured using a microscopic Raman spectrometer (product name: LabRAM HR Evolution, a microscopic laser Raman spectrometer available from Horiba, Ltd.) by performing high-speed mapping and bright spot imaging at 602 nm. The results are presented in FIGS. 3 to 4 and Table 3. The percentage of the number of bright spots emitting fluorescence at approximately 602 nm which is the ZPL of the Ge-V centers was approximately 61.6% (= 100 × 6283 ÷ 10201).

**[Table 3]**

| Conditions of Gas-Phase Oxidation Treatment | Number of Bright Spots of GeV During Fluorescence Mapping |
|---|---|
| 470°C, 2 hours | 1050 |
| 520°C, 2 hours | 6283 |

## Claims

1. Heteroatom-doped nanodiamond particles having a fluorescence emission peak derived from heteroatom-vacancy (Heteroatom-V) centers and satisfying conditions consisting of:
(i) when 1 µL of a 1 mass% aqueous suspension of the heteroatom-doped nanodiamond particles is added dropwise onto a glass substrate, and fluorescence spectra are acquired for 101 × 101 spots using a microscopic Raman apparatus at a spatial resolution of 1 µm and in a sample range of 100 µm × 100 µm, a percentage of the number of bright spots emitting fluorescence with a zero-phonon line (ZPL) peak at ZPL ± X nm (0 ≤ X ≤ 5) of the Heteroatom-V centers is 50% or greater; and
(ii) an average size of primary particles is from 2 to 70 nm.

2. The heteroatom-doped nanodiamond particles according to claim 1, wherein a heteroatom is a Group 14 element selected from the group consisting of Si, Ge, Sn, and Pb.

3. The heteroatom-doped nanodiamond particles according to claim 1 or 2, wherein a heteroatom is Si, and (i) when 1 µL of a 1 mass% aqueous suspension of the heteroatom-doped nanodiamond particles is added dropwise onto a glass substrate, and fluorescence spectra are acquired for 101 × 101 spots using a microscopic Raman apparatus at a spatial resolution of 1 µm and in a sample range of 100 µm × 100 µm with an excitation light of 532 nm, a percentage of the number of bright spots emitting fluorescence with a ZPL peak at ZPL 738 nm ± X nm (0 ≤ X ≤ 5) of Si-V centers is 50% or greater.

4. The heteroatom-doped nanodiamond particles according to claim 1 or 2, wherein a heteroatom is Ge, and (i) when 1 µL of a 1 mass% aqueous suspension of the heteroatom-doped nanodiamond particles is added dropwise onto a glass substrate, and fluorescence spectra are acquired for 101 × 101 spots using a microscopic Raman apparatus at a spatial resolution of 1 µm and in a sample range of 100 µm × 100 µm with an excitation light of 532 nm, a percentage of the number of bright spots emitting fluorescence with a ZPL peak at ZPL 602 nm ± X nm (0 ≤ X ≤ 5) of Ge-V centers is 50% or greater.

5. The heteroatom-doped nanodiamond particles according to any one of claims 1 to 4, wherein a peak area ratio of sp²-carbon to sp³-carbon (sp²-carbon/sp³-carbon) of the heteroatom-doped nanodiamond particles obtained by Raman spectroscopy is from 0.01 to 7.0.

6. The heteroatom-doped nanodiamond particles according to any one of claims 1 to 5, wherein the heteroatom-doped nanodiamond particles satisfy one or more conditions selected from the group consisting of:
(a) the heteroatom-doped nanodiamond particles have a zeta potential from -70 mV to 70 mV; and
(b) when the heteroatom-doped nanodiamond particles are dispersed in water at a concentration of 3 wt.%, a pH is from 1 to 12.

7. The heteroatom-doped nanodiamond particles according to any one of claims 1 to 6, wherein the heteroatom-doped nanodiamond particles have a shape that is spherical, ellipsoidal, or polyhedral.

8. The heteroatom-doped nanodiamond particles according to any one of claims 1 to 7, wherein the heteroatom-doped nanodiamond particles have a BET specific surface area from 20 to 900 m²/g.

9. The heteroatom-doped nanodiamond particles according to any one of claims 1 to 8, wherein the percentage of the number of bright spots is 90% or greater.

10. A production method for producing heteroatom-doped nanodiamond particles, the method comprising subjecting a heteroatom-doped nanodiamond raw material produced by detonation method to one or more treatments selected from the group consisting of:
(I) an oxidation treatment at a temperature from 500 to 650°C; and
(II) a hydrogenation treatment at a temperature from 300 to 1200°C.

11. The production method according to claim 10, wherein the oxidation treatment is performed in an atmosphere having an oxygen concentration from 1 to 100%.

12. The production method according to claim 10, wherein the hydrogenation treatment is performed in an atmosphere having a hydrogen concentration from 1 to 100%.
